# EUROPÄISCHE PATENTSCHRIFT

(11) **EP 1 108 976 B1**
(45) Veröffentlichungstag und Bekanntmachung des Hinweises auf die Patenterteilung: **17.09.2003**
(21) Anmeldenummer: 00121823.9
(22) Anmeldetag: 06.10.2000
(51) Int. Cl.: G01B 7/30, G01D 5/347, B62D 15/02

(54) **Lenkwinkelsensor**
Steering angle sensor
Capteur de l'angle de braquage

(30) Priorität: 15.12.1999 DE 19960789
(43) Veröffentlichungstag der Anmeldung: 20.06.2001
(73) Patentinhaber: Valeo Schalter und Sensoren GmbH, 74321 Bietigheim-Bissingen (DE)
(72) Erfinder: Neckel, Klaus, 74343 Sachsenheim (DE); Engelhardt, Martin, 74246 Eberstadt (DE); Klein, Rudolf, 74348 Lauffen (DE); Ruff, Achim, 74399 Walheim (DE)
(74) Vertreter: Steimle, Josef, Dipl.-Ing.

(56) Entgegenhaltungen:
- EP-A- 0 922 627
- DE-A- 4 137 670
- DE-A- 4 243 778
- PATENT ABSTRACTS OF JAPAN vol. 1999, no. 13, 30. November 1999 (1999-11-30) & JP 11 231814 A (SANYO ELECTRIC CO LTD;TOTTORI SANYO ELECTRIC CO LTD; SHIMANE SANYO KOG), 27. August 1999 (1999-08-27)

## Beschreibung

Die Erfindung betrifft einen Lenkwinkelsensor mit einer eine optisch abtastbare Winkelcodierung aufweisenden Codescheibe und mit einer optischen Abtastung der Winkelcodierung, wobei wenigstens ein Sendeelement, das optische Signale aussendet, und wenigstens ein Empfängerelement, das die die Winkelcodierung abtastenden Signale empfängt, vorhanden sind.

Mit wachsender Verbreitung von Regelsystemen zur Regelng der Fahrdynamik von Kraftfahrzeugen hat die Bedeutung von Lenkwinkelsensoren erheblich zugenommen. Derartige Sensorer haben die Aufgabe, ein Signal zu erzeugen, welches kennzeichnend für den Lenkwinkel bzw. die Lenkwinkeländerung eines Fahrzeugs ist. Hierzu ist in der Regel ein Codierelement, insbesondere eine Codescheibe, starr mit der Lenksäule verbunden. Der Codescheibe ist eine Abtastung zugeordnet, welche gegenüber dem Chassis bzw. der Lenksäule fixiert ist und welche in der Lage ist, den Code der Codescheibe zu lesen. Ein mögliches Prinzip zur Abtastung der Codescheibe kann in einer optischen Abtastung bestehen. Dabei sind an der Codescheibe in Form von Zähnen oder Aussparungen Markierungen angebracht, die durch beispielsweise eine optische Lichtschranke abgetastet werden. Die Abtasteinrichtung kann aus einer Leuchtdiode und einem Lichtempfänger bzw. einer Mehrzahl derartiger Bauelemente bestehen.

Um eine funktionssichere Abtastung gewährleisten zu können, ist es bei einem solchen Stand der Technik erforderlich, auf der einen Seite der Codescheibe die Sendeelemente und auf der anderen Seite der Codescheibe die Empfängerelemente anzuordnen. Dazu müssen Sende- und Empfängerelemente genau und funktionssicher angeordnet werden, damit gewährleistet ist, dass die ausgesendeten Signale die Winkelcodierung korrekt abtasten und von den Empfängerelementen erfasst werden. Der bekannte Stand der Technik sieht dabei vor, dass die Empfänger- und Sendeelemente unmittelbar an der Codescheibe angeordnet sind, um ein genaues Erfassen der Winkelcodierung gewährleisten zu können.

Nachteil dieses Standes der Technik ist, dass die Sende- und Empfängerelemente abhängig von der Winkelcodierung der Codescheibe anzuordnen sind, was einen erheblichen Aufwand im Hinblick auf die für die Sende- und Empfängerelemente bereitzustellenden Halterungen mit sich bringt.

Aus der DE 41 37 670 A1 ist eine Beleuchtungs-Lichtleitstruktur bekannt geworden, bei der ausgehend von einer Lichtquelle Lichtsignale in die Lichtleitstruktur eindringen und über verschiedene Reflektionsflächen in der Lichtleitstruktur verteilt werden.

Aus der JP 11231814 ist ein Lichtleiter bekannt geworden, der einen von einer Lichtquelle ausgehenden Lichtstrahl achsversetzt umlenkt. Dabei ist der Lichtleiter auf die Lichtquelle aufgesteckt gehaltert.

Aus der DE 4243778 A1 ist ein Lenkwinkelsensor bekannt geworden, der eine mehrspurige Codescheibe aufweist, wobei die Codespuren von einem Abtastsensor optisch abgetastet werden.

Aus der EP 0 922 627 A1 ist ein gattungsgemäßer Lenkwinkelsensor bekannt geworden.

Der vorliegenden Erfindung liegt deshalb die Aufgabe zugrunde, einen Lenkwinkelsensor bereitzustellen, der den Nachteilen des bekannten Standes der Technik abhilft. Ferner soll der Signalverlust zwischen Austritt der Signale aus dem Sendeelement und Eintritt der Signale in den Lichtleiter gering gehalten werden.

Diese Aufgabe wird bei einem Lenkwinkelsensor der eingangs beschriebenen Art erfindungsgemäß dadurch gelöst, der die Merkmale des Anspruchs 1 aufweist.

Der erfindungsgemäße Lenkwinkelsensor hat dabei den wesentlichen Vorteil, dass die Sende- und Empfängerelemente nicht unmittelbar an der Codescheibe bzw. der Winkelcodierung angebracht werden müssen. Aufgrund der Anordnung eines Lichtleiters zwischen dem Sendeelement und der Winkelcodierung und/oder dem Empfängerelement und der Winkelcodierung ist es erfindungsgemäß möglich, die Sendeelemente und/oder Empfängerelemente in einem gewissen Abstand zu der Codescheibe zu halten, der über den oder die Lichtleiter überbrückt wird. Aufgrund der Eigenschaft des Lichtleiters können Sende- und Empfängerelemente auch in verschiedenen Ebenen und unter verschiedenen Winkeln zueinander angeordnet und gehaltert werden.

Die Erfindung hat ferner den Vorteil, dass der Lichtleiter wenigstens eine Aussparung zur Aufnahme des Sendeelements bzw. der Sendeelemente aufweist. Durch eine solche Aussparung, welche insbesondere den Bereich des Sendeelements, welcher die optischen Signale aussendet, vollkommen umgibt, wird erreicht, dass der Signalverlust zwischen Austritt der Signale aus dem Sendeelement und Eintritt der Signale in den Lichtleiter minimiert wird.

Bei einer vorteilhaften Ausgestaltung der Erfindung fächert der Lichtleiter die ausgesendeten Signale auf. Ein solcher Lichtleiter ist vorteilhafterweise zwischen den Sendeelementen und der Codescheibe angeordnet, so dass eine Abtastung der Winkelcodierung an mehreren Stellen der Codescheibe zeitgleich erfolgen kann. Aufgrund der Verwendung von mehreren phasenverschobenen Abtastungen der Winkelcodierung kann aus den abgetasteten Signalen ein Codewort gebildet werden, aus welchem der Lenkwinkel bzw. die Lenkwinkeländerung bestimmt werden kann.

Vorteilhafterweise ist dabei vorgesehen, dass der wenigstens eine Lichtleiter verschiedene Lichtleiterzweige für die aufgefächerten Signale aufweist. Damit kann mit einer geringen Anzahl von Sendeelementen eine Abtastung an verschiedenen, zueinander phasenverschoben angeordneten Stellen der Winkelcodierung erfolgen.

Zur Umlenkung der Signale in dem wenigstens einen Lichtleiter kann erfindungsgemäß vorgesehen sein, dass der Lichtleiter und/oder die Lichtleiterzweige Reflexionsebenen aufweisen. Durch solche definierten Reflexionsebenen wird gewährleistet, dass die optischen Signale durch den Lichtleiter bzw. Lichtleiterzweig so geführt werden, dass eine Abtastung der Winkelcodierung funktionssicher erfolgen kann.

Bei einer anderen Ausgestaltung der Erfindung weist jeder Lichtleiterzweig zwei Reflexionsebenen auf, die die Signale bezüglich einer zu der Codescheibe orthogonalen der Ebene jeweils um 90° umlenken. Dadurch wird erreicht, dass das Sende- bzw. Empfängerelement in einem Winkel von 90° zu der Codescheibe angebracht werden kann. Eine solche Anbringung und Halterung der Sende- und Empfängerelemente hat sich in der Praxis als besonders vorteilhaft herusgestellt.

Bei einer besonders bevorzugten Ausgestaltungsform der Erfindung ist lediglich ein Sendeelement vorhanden. Insbesondere unter Verwendung eines Lichtleiters zwischen dem einen Sendeelement und der Winkelcodierung, der die ausgesendeten Signale umlenkt und auffächert und verschiedene Lichtleiterzweige aufweist, kann der Lenkwinkelsensor sehr stromsparend eingesetzt werden.

Eine Variante der Erfindung kennzeichnet sich dadurch, dass der Lichtleiter an der der Codescheibe zugewandten Seite Austrittsabschnitte für einen definierten Austritt der Signale aus dem Lichtleiter aufweist, die die Signale in Richtung Winkelcodierung bündeln. Solche Austrittsabschnite minimieren einen Signalverlust beim Austritt der optischen Signale aus dem Lichtleiter und gewähren eine erhöhte Signalintensität in Richtung der Winkelcodierung.

Dazu kann vorteilhafterweise vorgesehen sein, dass die Austrittsabschnitte einen sammellinsenartigen Querschnitt aufweisen. Ein solcher Querschnitt weist Eigenschaften auf, die die Signale in Richtung Winkelcodierung bündeln.

Bei einer besonders bevorzugten Ausgestaltung der Erfindung ist vorgesehen, dass die Sende- und Empfängerelemente auf der gleichen Seite der Codescheibe angeordnet sind. Dies kann insbesondere dadurch erreicht werden, dass beispielsweise ein Lichtleiter mit Lichtleiterzweigen zwischen dem Sendeelement und der Codescheibe angeordnet ist, der die optischen Signale um einen Winkel von insgesamt 180° bezüglich einer zu der Codescheibe orthogonal angeordneten Ebene umlenkt und in Richtung Winkelcodierung bündelt. Auf der gleichen Seite der Codescheibe kann das Empfängerelement unmittelbar im Bereich der Winkelcodierung angeordnet sein.

Dabei kann vorteilhafterweise vorgesehen sein, dass die Sende- und die Empfängerelemente auf einer Leiterplatine angeordnet sind. Dies hat den Vorteil, dass lediglich eine Leiterplatine für die Sende- und Empfängerelemente vorgesehen werden muss.

Bei einer anderen Ausgestaltungsform der Erfindung wird die Winkelcodierung mehrfach von den ausgesendeten Signalen optisch abgetastet. Insbesondere aus einem phasenversetzten, zeitgleichen Abtasten der Winkelcodierung kann zuverlässig auf den Lenkwinkel bzw. auf die Lenkwinkeländerung geschlossen werden.

Eine Variante der Erfindung sieht dabei vor, dass die Winkelcodierung zwei oder vier Codespuren aufweist. Je nach Art und Codierung der Winkelcodierung können zwei oder vier Codespuren zur optimalen Bestimmung des Lenkwinkels vorteilhaft sein.

Bei einer Weiterbildung der Erfindung sind die Lichtleiterzweige je nach Anzahl der Codespuren V- oder W-förmig angeordnet. Eine V-förmige Anordnung eignet sich insbesondere zur Abtastung von einer Winkelcodierung mit zwei Codespuren, eine W-förmige für vier Codespuren.

Bei einer anderen Ausgestaltung der Erfindung ist vorgeshen, dass die Sendeelemente wenigstens eine Leuchtdiode aufweisen. Eine Leuchtdiode eignet sich insbesondere deshalb als Sendeelement, weil sie eine sehr hohe Lebensdauer, einen geringen Leistungsverbrauch, eine geringe Betriebstemperatur bei einer ausreichenden Lichtstärke aufweist.

Als Empfängerelemente können vorzugsweise Fotodioden eingesetzt werden. Fotodioden eignen sich insbesondere in Verbindung mit Leuchtdioden als Empfängerelemente.

Bei einer anderen Ausgestaltung der Erfindung weisen die ausgesendeten Signale eine Taktung auf. Eine solche Taktung, bei welcher die Sendeelemente idealerweise nur für sehr kurze Zeit optische Signale aussenden, bringt insbesondere eine zusätzliche Stromersparnis mit sich.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Fig. 1:: einen Lenkwinkelsensor in perspektivischer Ansicht;
- Fig. 2:: einen Schnitt durch den Lenkwinkelsensor nach Fig. 1; und
- Fig. 3, 4 u. 4a:: einen Lichtleiter in verschiedenen Ansichten.

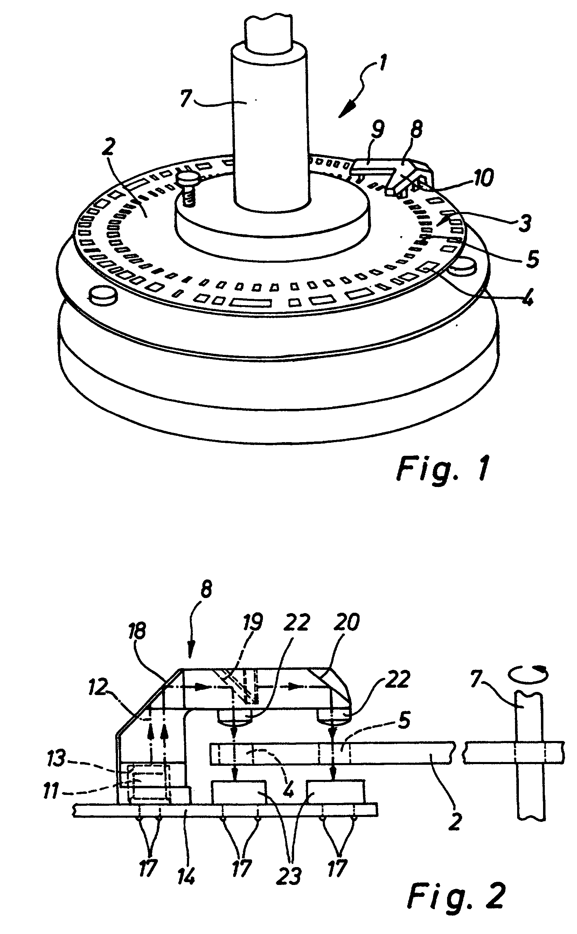

In Fig. 1 ist ein Lenkwinkelsensor 1 dargestellt, der eine Codescheibe 2 mit einer Winkelcodierung 3 aufweist. Die Winkelcodierung 3 weist ihrerseits zwei Codespuren 4 und 5 auf. Die Codescheibe 2 ist dabei mit einer Lenksäule 7 eines Kraftfahrzeuges drehfest gekoppelt. Zur Bestimmung des Lenkwinkels bzw. einer Lenkwinkeländerung wird die Winkelkodierung 3 optisch abgetastet, wofür in dieser Figur nicht zu sehende Sendeelemente, die optische Signale aussenden, ein Lichtleiter 8, der die Signale auffächert und umlenkt und zwei Lichtleiterzweigen 9 und 10 aufweist, sowie Empfängerlemente, die die Signale empfangen, vorhanden sind.

Aus Fig. 2, die einen Schnitt durch den Lenkwinkelsensor 1 bzw. den Lichtleiter 8 zeigt, wird deutlich, wie die von dem Sendeelement 11, nämlich lediglich einer Leuchtdiode, ausgesendeten Signale 12 den Lichtleiter 8 durchtreten, von ihm umgelenkt und aufgefächert werden und die Winkelcodierung 3 bzw. die Codespuren 4 und 5 abtasten.

Die von dem Sendeelement 11 ausgesandten Signale 12 werden zunächst an einer ersten Reflexionsebene 18 reflektiert, aufgefächert und um 90° bezüglich einer zur Codescheibe 2 orthogonalne Ebene umgelenkt. Nach der ersten Reflexion verlaufen die aufgefächerten Signale 12 parallel zu der Codescheibe 2. An weiteren insgesamt 4 Reflexionsebenen 19 und 20, die senkrecht über den abzutastenden Stellen der Codescheibe 2 unter einem definierten Winkel angeordnet sind, werden die aufgefächerten Signale 12 entsprechend um 90° in Richtung Winkelcodierung 3 umgelenkt.

Im Weiteren weist der Lichtleiter 8 an der der Codescheibe 2 zugewandten Seite vier Austrittsabschnitte 22 für einen definierten Austritt der Signale 12 aus dem Lichtleiter 8 auf, die die Signale 12 in Richtung Winkelcodierung 13 bzw. Codespur 4 oder 5 bündeln. Die Austrittsabschnitte 22 weisen dabei einen sammellinsenartigen Querschnitt auf.

Auf der den Austrittsabschnitten 22 abgewandten Seite der Codescheibe 2 sind insgesamt vier Empfängerelemente 23, vorzugsweise Fotodioden, angeordnet. Die Empfängerelemente 23 empfangen dabei die in den vier Austrittsabschnitten 22 austretenden und die Winkelcodierung 3 passierenden Signale 12. Die Empfängerelemente 23 sind vorteilhafterweise auf derselben Leiterplatte 14 wie das Sendeelement 11 mittels Lötstellen 17 verlötet, was den Vorteil hat, dass das Sendeelement 11 und die Empfängerelemente 23 auf der gleichen Seite der Codescheibe 2 angeordnet sind und lediglich eine elektrische Schnittstelle für die Abtastelektronik vorhanden zu sein braucht.

Wird nun die Codescheibe 2 aufgrund einer Lenkraddrehung bzw. einer Drehung der Lenksäule 7 verdreht, so wird aufgrund der abgetasteten, sich zeitlich verändernden Signale 12, die in einer nicht dargestellten Auswerteeinheit ausgewertet werden, der Lenkwinkel bzw. eine Lenkwinkeländerung bestimmt.

Aus Figur 2 ist weiterhin zu erkennen ist, dass der Lichtleiter 8 eine Aussparung 13 zur Aufnahme des Sendeelements 11 vorsieht. Der Lichtleiter 8 ist dabei auf einer Leiterplatine 14 montiert, auf welcher ebenfalls das Sendeelement 11 angeordnet und mit den Lötstellen 17 verlötet ist. Die Aussparung 13, die zylindersenkungartig ausgeführt ist, umschließt das Sendeelement 11.

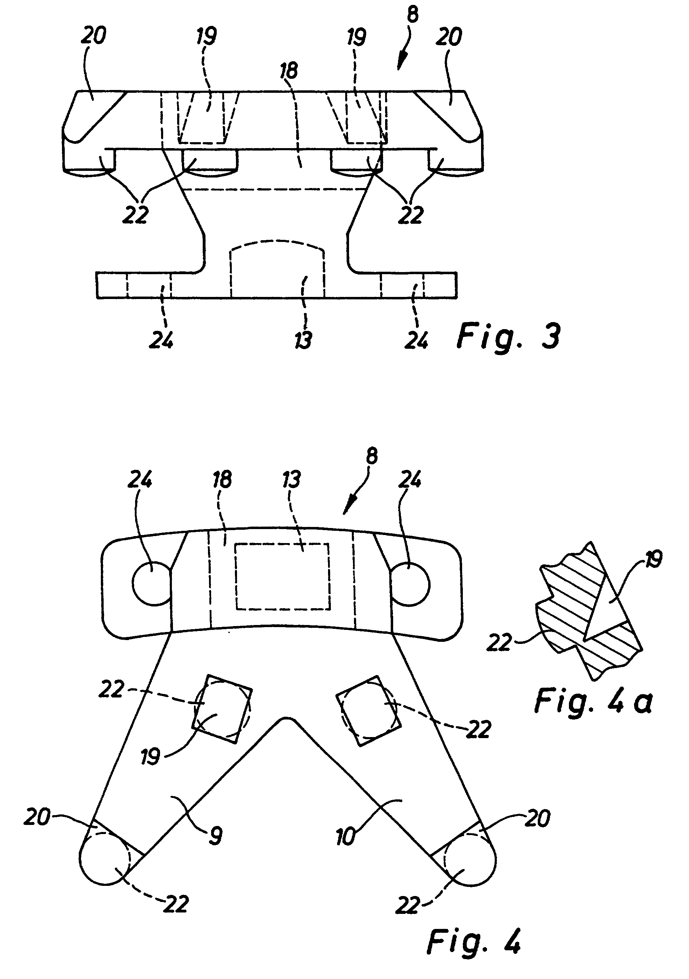

Fig. 3 zeigt die Vorderansicht des Lichtleiters 8. Deutlich zu erkennen sind die Aussparung 13, die vier Austrittsabschnitte 22 und die verschiedenen Reflexionsebenen 18, 19 und 20, an welchen die optischen Signale 12 derart reflektiert werden, dass sie von dem in Fig. 3 nicht dargestellten Sendeelement 11 über den Lichtleiter 8 zu den Austrittsabschnitten 22 umgelenkt werden.

Aus Fig. 4, die die Draufsicht auf den Lichtleiter 8 zeigt, ist deutlich zu erkennen, :dass der Lichtleiter 8 V-förmig mit den beiden Lichtleiterzweigen 9 und 10 ausgebildet ist. Fig. 4a zeigt einen Schnitt durch einen Austrittsabschnitt 22 mit zugehöriger Reflexionsebene 19.

Weiterhin zeigen Fig. 3 und 4 Zylinderbohrungen 24 zur Fixierung des Lichtleiters 8 auf der Leiterplatine 14.

In dem gezeigten Ausführungseispiel erfolgt die Abtastung der Codespuren 4 und 5 phasenversetzt, weshalb die Austrittsabschnitte 22 bei einer Abtastung von lediglich zwei Codespuren 4 und 5 an den V-förmig angeordneten Lichtleiterzweigen 9 und 10 angeordnet sind. Bei einer Abtastung von vier Codespuren kann erfindungsgemäß vorgesehen sein, dass die Lichtleiterzweige W-förmig verlaufen.

## Patentansprüche

1. Lenkwinkelsensor (1) mit einer eine optisch abtastbare Winkelcodierung (3) aufweisenden Codescheibe (2) und mit einer optischen Abtastung der Winkelcodierung (3), wobei wenigstens ein Sendeelement (11), das optische Signale (12) aussendet, und wenigstens ein Empfängerelement (23), das die die Winkelcodierung (3) abtastenden Signale (12) empfängt, vorhanden sind, wobei zwischen dem wenigstens einen Sendeelement (11) und dem wenigstens einen Empfängerelement (23) wenigstens ein Lichtleiter (8) angeordnet ist, der die von dem wenigstens einen Sendeelement (11) ausgesendeten Signale umlenkt, und wobei das wenigstens eine Sendeelement (11)-auf einer Leiterplatine (14) angeordnet ist, **dadurch gekennzeichnet, dass** auch der Lichtleiter (8) auf der Leiterplatine (14) angeordnet ist, wobei der-Lichtleiter (8) wenigstens eine Aussparung (13)zur Aufnahme des Sendeelements (11) bzw. der Sendeelemente aufweist.

2. Lenkwinkelsensor (1) nach Anspruch 1, **dadurch gekennzeichnet, dass** der wenigstens eine Lichtleiter (8) die ausgesendeten Signale (12) auffächert.

3. Lenkwinkelsensor (1) nach Anspruch 1 oder 2, **dadurch gekennzeichnet, dass** der wenigstens eine Lichtleiter (8) verschiedene Lichtleiterzweige (9, 10) für die aufgefächerten Signale (12) aufweist.

4. Lenkwinkelsensor (1) nach Anspruch 1, 2 oder 3, **dadurch gekennzeichnet, dass** der Lichtleiter und/oder die Lichtleiterzweige (9, 10) Reflexionsebenen (18, 19, 20) zur Umlenkung der Signale (12) aufweisen.

5. Lenkwinkelsensor (1) nach einem der vorhergehenden Ansprüche, **dadurch gekennzeichnet, dass** jeder Lichtleiterzweig (9, 10) zwei Reflexionsebenen (18, 19, 20) aufweist, die die Signale (12) bezüglich einer zu der Codescheibe (2) orthogonalen Ebene jeweils um 90° umlenken.

6. Lenkwinkelsensor (1) nach einem der vorhergehenden Ansprüche, **dadurch gekennzeichnet, dass** lediglich ein Sendeelement (11) vorhanden ist.

7. Lenkwinkelsensor (1) nach einem der vorhergehenden Ansprüche, **dadurch gekennzeichnet, dass** der Lichtleiter (8) an der der Codescheibe zugewandten Seite Austrittsabschnitte (22) für einen definierten Austritt der Signale (12) aus dem Lichtleiter (8) aufweist, die die Signale (12) in Richtung Winkelcodierung (3) bündeln.

8. Lenkwinkelsensor (1) nach Anspruch 8, **dadurch gekennzeichnet, dass** die Austrittsabschnitte (22) einen sammellinsenartigen Querschnitt aufweisen.

9. Lenkwinkelsensor (1) nach einem der vorhergehenden Ansprüche, **dadurch gekennzeichnet, dass** die Sende- und die Empfängerelemente (11, 23) auf der gleichen Seite der Codescheibe (2) angeordnet sind.

10. Lenkwinkelsensor (1) nach einem der vorhergehenden Ansprüche, **dadurch gekennzeichnet, dass** die Sende- und die Empfängerelemente (11, 23) auf einer Leiterplatine (14) angeordnet sind.

11. Lenkwinkelsensor (1) nach einem der vorhergehenden Ansprüche, **dadurch gekennzeichnet, dass** die Winkelcodierung (3) mehrfach von den ausgesendeten Signalen (12) optisch abgetastet wird.

12. Lenkwinkelsensor (1) nach einem der vorhergehenden Ansprüche, **dadurch gekennzeichnet, dass** die Winkelcodierung (3) zwei Codespuren (4, 5) oder vier Codespuren aufweist.

13. Lenkwinkelsensor (1) nach einem der vorhergehenden Ansprüche, **dadurch gekennzeichnet, dass** die Lichtleiterzweige (9, 10) je nach Anzahl der Codespuren (4, 5) V- oder W-förmig angeordnet sind.

14. Lenkwinkelsensor (1) nach einem der vorhergehenden Ansprüche, **dadurch gekennzeichnet, dass** das wenigstens eine Sendeelement (11) wenigstens eine Leuchtdiode aufweist.

15. Lenkwinkelsensor (1) nach einem der vorhergehenden Ansprüche, **dadurch gekennzeichnet, dass** wenigstens eine Empfängerelement (23) wenigstens eine Fotodiode aufweist.

16. Lenkwinkelsensor (1) nach einem der vorhergehenden Ansprüche, **dadurch gekennzeichnet, dass** die ausgesendeten Signale (12) eine Taktung aufweisen.

## Claims

1. Steering angle sensor (1) with a code plate (2) comprising an optically scannable angle code (3) and with optical scanning of the angle code (3), at least one transmitting element (11) which transmits optical signals (12) and at least one receiving element (23) which receives the signals (12) scanning the angle code (3) being provided, at least one optical fibre (8) which deflects the signals transmitted by the at least one transmitting element (11) being arranged between the at least one transmitting element (11) and the at least one receiving element (23), and the at least one transmitting element (11) being arranged on a printed circuit board (14), **characterised in that** the optical fibre (8) is also arranged on the printed circuit board (14), the optical guide (8) having at least one recess (13) for receiving the transmitting element (11) or the transmitting elements.

2. Steering angle sensor (1) according to claim 1, **characterised in that** the at least one optical fibre (8) fans out the transmitted signals (12).

3. Steering angle senor (1) according to claim 1 or 2, **characterised in that** the at least one optical fibre (8) has various optical fibre branches (9, 10) for the fanned- out signals (12).

4. Steering angle sensor (1) according to claim 1, 2 or 3, **characterised in that** the optical fibre and/or the optical fibre branches (9, 10) have reflective planes (18, 19, 20) to deflect the signals (12).

5. Steering angle sensor (1) according to any one of the preceding claims, **characterised in that** each optical fibre branch (9, 10) has two reflective planes (18, 19, 20) which deflect the signals (12) by 90° in each case with respect to a plane which is orthogonal to the code plate (2).

6. Steering angle sensor (1) according to any one of the preceding claims, **characterised in that** only one transmitting element (11) is provided.

7. Steering angle sensor (1) according to any one of the preceding claims, **characterised in that** the optical guide (8) has exit portions (22) on the side facing the code plate for a defined exit of the signals (12) from the optical fibre (8), which exit portions (22) bundle the signals (12) in the direction of an angle code (3).

8. Steering angle sensor (1) according to claim 8, **characterised in that** the exit portions (22) have a convergence lens-like cross-section.

9. Steering angle sensor (1) according to any one of the preceding claims, **characterised in that** the transmitting and receiving elements (11, 23) are arranged on the same side of the code plate (2).

10. Steering angle sensor (1) according to any one of the preceding claims, **characterised in that** the transmitting and receiving elements (11, 23) are arranged on a printed circuit board (14).

11. Steering angle sensor (1) according to any one of the preceding claims, **characterised in that** the angle code (3) is repeatedly optically scanned by the transmitted signals (12).

12. Steering angle sensor (1) according to any one of the preceding claims, **characterised in that** the angle code (3) has two code tracks (4, 5) or four code tracks.

13. Steering angle sensor (1) according to any one of the preceding claims, **characterised in that** the optical fibre branches (9, 10) are arranged in a V- or W-shape, depending on the number of code tracks (4, 5).

14. Steering angle sensor (1) according to any one of the preceding claims, **characterised in that** the at least one transmitting element (11) has at least one light-emitting diode.

15. Steering angle sensor (1) according to any one of the preceding claims, **characterised in that** at least one receiving element (23) has at least one photodiode.

16. Steering angle sensor (1) according to any one of the preceding claims, **characterised in that** the transmitted signals (12) have clocking.

## Revendications

1. Capteur d'angle de braquage (1) comprenant un disque de support de code (2) présentant un codage angulaire (3) pouvant être exploré par voie optique, et un système d'exploration optique du codage angulaire (3), au moins un élément d'émission (11), qui émet des signaux optiques (12), et au moins un élément de réception (23), qui reçoit les signaux (12) explorant le codage angulaire (3), étant prévus, au moins un guide d'ondes lumineuses (fibre optique) (8), qui dévie les signaux émis par ledit au moins un élément d'émission (11), étant disposé entre ledit au moins un élément d'émission (11) et ledit au moins un élément de réception (23), et ledit au moins un élément d'émission (11) étant disposé sur une plaquette de circuit imprimé (14),
**caractérisé en ce que** le guide d'ondes lumineuses (8) est également disposé sur la plaquette de circuit imprimé (14), le guide d'ondes lumineuses (8) présentant au moins un évidemment (13) pour loger l'élément d'émission (11) ou des éléments d'émission.

2. Capteur d'angle de braquage (1) selon la revendication 1, **caractérisé en ce que** ledit au moins un guide d'ondes lumineuses (8) fractionne les signaux (12) émis.

3. Capteur d'angle de braquage (1) selon la revendication 1 ou 2, **caractérisé en ce que** ledit au moins un guide d'ondes lumineuses (8) présente des branches de guide d'ondes lumineuses (9, 10) différentes pour les signaux (12) fractionnés.

4. Capteur d'angle de braquage (1) selon la revendication 1, 2 ou 3, **caractérisé en ce que** le guide d'ondes lumineuses et/ou les branches de guide d'ondes lumineuses (9, 10) présentent des plans de réflexion (18, 19, 20) pour dévier les signaux (12).

5. Capteur d'angle de braquage (1) selon l'une des revendications précédentes, **caractérisé en ce que** chaque branche de guide d'ondes lumineuses (9, 10) présente deux plans de réflexion (18, 19, 20), qui, relativement à un plan orthogonal au disque de support de code (2), dévient chacun les signaux (12) respectivement de 90°.

6. Capteur d'angle de braquage (1) selon l'une des revendications précédentes, **caractérisé en ce qu'**il est prévu uniquement un seul élément d'émission (11).

7. Capteur d'angle de braquage (1) selon l'une des revendications précédentes, **caractérisé en ce que** le guide d'ondes lumineuses (8) présente sur le côté dirigé vers le disque de support de code, des tronçons d'émergence (22) pour une émergence définie des signaux (12) du guide d'ondes lumineuses (8), tronçons qui concentrent les signaux (12) en direction du codage angulaire (3).

8. Capteur d'angle de braquage (1) selon la revendication 7, **caractérisé en ce que** les tronçons d'émergence (22) présentent une section transversale en forme de lentille convergente.

9. Capteur d'angle de braquage (1) selon l'une des revendications précédentes, **caractérisé en ce que** les éléments d'émission et de réception (11, 23) sont disposés sur le même côté du disque de support de code (2).

10. Capteur d'angle de braquage (1) selon l'une des revendications précédentes, **caractérisé en ce que** les éléments d'émission et de réception (11, 23) sont disposés sur une plaquette de circuit imprimé (14).

11. Capteur d'angle de braquage (1) selon l'une des revendications précédentes, **caractérisé en ce que** le codage angulaire (3) est exploré par voie optique de façon multiple, par les signaux (12).

12. Capteur d'angle de braquage (1) selon l'une des revendications précédentes, **caractérisé en ce que** le codage angulaire (3) présente deux pistes de code (4, 5) ou quatre pistes de code.

13. Capteur d'angle de braquage (1) selon l'une des revendications précédentes, **caractérisé en ce que** les branches de guide d'ondes lumineuses (9, 10) sont disposées en forme de V ou de W suivant le nombre des pistes de code (4, 5).

14. Capteur d'angle de braquage (1) selon l'une des revendications précédentes, **caractérisé en ce que** ledit au moins un élément d'émission (11) comprend au moins une diode électroluminescente.

15. Capteur d'angle de braquage (1) selon l'une des revendications précédentes, **caractérisé en ce que** ledit au moins un élément de réception (23) comprend au moins une photodiode.

16. Capteur d'angle de braquage (1) selon l'une des revendications précédentes, **caractérisé en ce que** les signaux (12) émis présentent un cadencement.
